# NEUE EUROPÄISCHE PATENTSCHRIFT

(11) **EP 0 548 470 B2**
(45) Veröffentlichungstag und Bekanntmachung des Hinweises auf die Entscheidung über den Einspruch: **08.12.1999**
(45) Hinweis auf die Patenterteilung: 21.06.1995
(21) Anmeldenummer: 92116069.3
(22) Anmeldetag: 19.09.1992
(51) Int. Cl.: G01L 9/06

(54) **Drucksensor mit einer Membran aus Halbleitermaterial**
Pressure transducer having a diaphragm of semi-conductive material
Capteur de pression avec un diaphragme en matériau sémi-conducteur

(30) Priorität: 24.12.1991 CH 384691
(43) Veröffentlichungstag der Anmeldung: 30.06.1993
(73) Patentinhaber: Landis & Gyr Technology Innovation AG, 6301 Zug (CH)
(72) Erfinder: Schultheis, Lothar, CH-5442 Fislisbach (CH); Huber, Wolfgang, CH-6330 Cham (CH)
(74) Vertreter: Müller, Hans-Jürgen, Dipl.-Ing.

(56) Entgegenhaltungen:
- EP-A- 0 286 867
- WO-A-88/01049
- DD-A- 234 559
- DE-A- 3 842 544
- DE-A- 3 912 217
- GB-A- 2 042 257
- US-A- 3 255 431
- US-A- 3 618 390
- US-A- 4 815 471
- PATENT ABSTRACTS OF JAPAN vol. 9, no. 292 (P-406)(2015) 19. November 1985 & JP-A-60129636
- ELECTRONIC ENGINEERING, Bd. 53, Nr. 659, November 1981, London, GB, Seite 169, E. Bose: "Fluid Pressure Transducers"

## Beschreibung

Die Erfindung bezieht sich auf einen Drucksensor mit einer Membran aus Halbleitermaterial.

Solche Drucksensoren eignen sich beispielsweise zur Messung des Druckes oder der mittleren Strömungsgeschwindigkeit in Heizwasserkreisen.

Ein Drucksensor der genannten Art ist aus WO 88/01049 bekannt. Der Drucksensor weist eine Membranträgerplatte aus Silizium auf, in der eine Membran mikromechanisch ausgebildet ist und die derart zwischen einer oberen und einer unteren Deckplatte aus Silizium angeordnet ist, dass zwischen der Membran und der oberen Deckplatte eine obere Kammer und zwischen der Membran und der unteren Deckplatte eine untere Kammer für ein Druckmedium nutzbar sind. Auf der Membran ist in der oberen Kammer ein Wandler mit elektrischen Zuleitungen angebracht, welche zwischen der oberen Deckplatte und der Membranträgerplatte aus der oberen Kammer geführt sind. In der oberen Kammer sind der Wandler und dessen Zuleitungen durch Passivierungsschichten vom Druckmedium getrennt. Die untere Deckplatte liegt auf einer Montageplatte, welche dem Druckmedium dienende Zuführungskanäle enthält, die in der unteren Deckplatte und teilweise auch in der Membranträgerplatte weitergeführt sind und von denen mindestens einer zur unteren Kammer und ein weiterer zur oberen Kammer führt.

Drucksensoren dieser Art müssen zusätzlich so in ein Gehäuse eingebaut werden, dass die elektrischen Zuleitungen des Wandlers zuverlässig kontaktierbar sind.

Es ist auch bekannt JP-A-60129636 einen Drucksensor mit einem Wandler in einem Gehäuse anzuordnen, welches an seiner Oberfläche zwei Trennmembranen aufweist und welches mit einer Druckmittterflüssigkeit ausgefüllt ist. Die Trennmembranen schützen den Wandler und die Messmembran aus Halbleitermaterial vor einem korrosiven Druckmedium.

Bei der Herstellung von Drucksensoren dieser Art muss das Gehäuse zuerst evakuiert, dann mit der Druckmittlerflüssigkeit aufgefüllt und zuletzt hermetisch verschlossen werden. Zudem vermindem die Trennmembranen die Empfindlichkeit der Drucksensoren.

Die Herstellung der bekannten, in korrosiver Umgebung einsetzbaren Drucksensoren ist relativ teuer, was sich vor allem bei Systemen mit einer grösseren Anzahl Drucksensoren verstärkt auf den Endpreis auswirkt.

Der Erfindung liegt die Aufgabe zugrunde, einen Drucksensor mit Membran aus Halbleitermaterial so zu verbessern, dass er in korrosiver Umgebung einsetzbar und trotzdem kostengünstig herstellbar ist.

Die Erfindung besteht in den im Anspruch 1 angegebenen Merkmalen. Vorteilhafte Ausgestaltungen ergeben sich aus den abhängigen Ansprüchen.

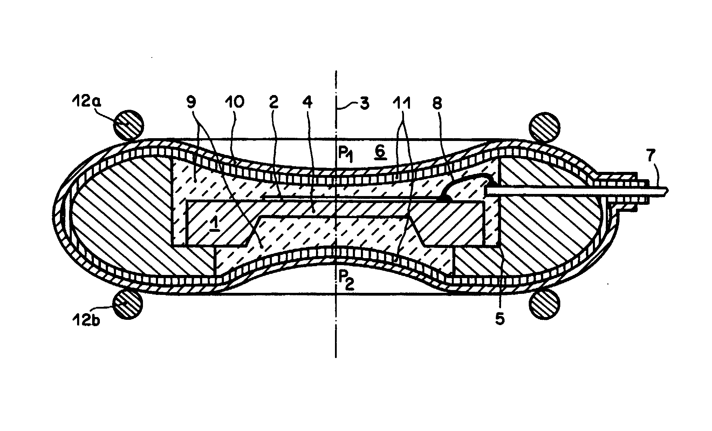

Nachfolgend wird ein Ausführungsbeispiel der Erfindung anhand der Zeichnung näher erläutert.

Die einzige Zeichnungsfigur zeigt einen Drucksensor mit korrosionshemmender Umhüllung im Querschnitt.

In der nicht maßstabgetreuen Zeichnung bedeutet 1 eine in der ursprünglichen Form vorzugsweise rechtkantige Platte aus Halbleitermaterial, in welcher eine mit einem Wandler 2 versehene, im wesentlichen längs ihrer Zentrumsachse 3 auslenkbare Membran 4 ausgebildet ist. Die Platte 1 ist auf einem rahmenförmigen, festen Träger 5 gelagert. der die Platte 1 entlang ihrem grössten Umfang umfasst und der zusammen mit einer im Flächebereich über der Membran 4 längs der Zentrumsachse 3 bewegbaren, zumindest teilweise aus mehreren Schichten aufgebauten Abdeckung 6 ein Gehäuse des Drucksensors bildet. Im Träger 5 sind mehrere Anschlusselemente 7 elektrisch isoliert eingelassen und befestigt, welche durch je eine elektrische Verbindung 8 am Wandler 2 angeschlossen sind. Eine erste Schicht der Abdeckung 6 ist ein zähflüssiges Druckmittlermedium 9, welches die Membran 4, den Wandler 2 und die Verbindungen 8 vollständig abdeckt und somit den Wandler 2 und die Verbindungen 8 gegenüber weiteren Schichten der Abdeckung 6 elektrisch isoliert. Eine korrosionssichere Schutzschicht 10 hüllt als zweite Schicht der Abdeckung 6 den Drucksensor derart vollständig ein, dass er von der Umgebung wasserdicht abgeschlossen ist. Auf Wunsch weist die Abdeckung 6 eine dritte Schicht auf, die eine Haftvermittlerschicht 11 ist, welche im wesentlichen zwischen der Schutzschicht 10 und dem Druckmitttermedium 9 angeordnet ist.

Der Drucksensor wird vorteilhaft mit Hilfe von axial zur Zentrumsachse 3 angebrachten Dichtungsringen 12 in ein System - beispielsweise in einen Heizkreis - eingebaut, wobei ein erster Dichtungsring 12a sich auf einer ersten von zwei Drukkaufnahmeseiten des Sensors und ein zweiter Dichtungsring 12b sich auf der anderen Druckaufnahmeseite vollständig auf den Träger 5 abstützt.

Die Platte 1 besteht mit Vorteil aus einkristallinem Silizium, in welches die Membran 4 in bekannter Art mikromechanisch ausgebildet ist. Je nach verlangten Materialeigenschaften sind aber auch andere Werkstoffe einsetzbar.

Der Wandler 2 ist eine Brückenschaltung mit Piezowiderständen oder ein anderes bekanntes System.

Damit das Gehäuse mechanisch stabil ist, besteht der Träger 5 mit Vorteil aus einem harten Kunststoff, der auch die Anschlusselemente 7 elektrisch isoliert.

Die Abdeckung 6 schützt einerseits die Membran 4 und den Wandler 2 vor einem zu messenden, korrosiven und elektrisch leitenden Druckmedium und überträgt andererseits dessen auf der ersten Druckaufnahmeseite wirkenden Druck P₁ bzw. den auf der anderen Druckaufnahmeseite anliegenden Druck P₂ auf die Membran 4, welche durch die Druckdifferenz P₁-P₂ in bekannter Weise ausgelenkt wird, wobei infolge der Auslenkung im Wandler 2 ein an den Anschlusselementen 7 verfügbares elektnsches Signal generiert wird. Im weiteren sind die Materialien der Abdeckung 6 und deren Dicke derart ausgewählt, dass die guten Elastizitätseigenschaften der Membran 4 nicht zu stark verdeckt werden.

Damit das Druckmittlermedium 9 kostengünstig und funktionsgerecht aufgetragen werden kann, besteht es mit Vorteil aus Silikon-Gel oder einem anderen zähfliessenden Polymer, dessen Vernetzungsgrad derart steuerbar ist, dass es ein Auftragen einer weiteren Schicht der Abdeckung 6 im Tauchverfahren erlaubt.

Ein guter Schutz gegen die korrosiven Eigenschaften des Druckmediums - insbesondere gegenüber Heizwasser - wird erreicht, wenn die Schutzschicht 10 eine dünne Schicht eines Übergangsmetalls ist, die den Drucksensor hermetisch abschliesst. Für die Schutzschicht 10 gut geeignete Übergangsmetalle sind vor allem Niob, Tantal oder Titan. Die Schutzschicht 10 besteht mit Vorteil aus einer etwa 2-10 µm dicken Schicht aus Niob, welche in einem bekannten Beschichtungsverfahren wie Aufdampfen, Sputtern, Ion-plating. Galvanisieren, Glow-Discharge oder als Kombination solcher Beschichtungsverfahren angebracht ist.

Beim Anbringen der Schutzschicht 10 ist durch Abdecken oder Isolieren der Anschlusselemente 7 zu verhindern, dass diese durch die Schutzschicht 10 kurzgeschlossen werden.

Die wahlfreie Haftmittlerschicht 11 ermöglicht eine feste Bindung der Schutzschicht 10 an deren Unterlage und besteht mit Vorteil aus Polyimid, einem anderen Polymer oder aus einem Metall, beispielsweise aus Gold. Auf Wunsch kann die Haftmittlerschicht 11 auf dem Druckmittlermedium 9 und auf dem Träger 5 angebracht werden. Wenn die Haftmittlerschicht 11 polymer ist, wird sie vorteilhaft im Tauchverfahren angebracht.

Auch ein anderer als der beschriebene Drucksensor, beispielsweise ein Absolutdrucksensor oder ein Drucksensor, dessen Wandler 2 nicht mit Piezowiderständen, sondern anders, beispielsweise kapazitiv arbeitet, oder auch ein Differenzdrucksensor, der zwei Membranen aufweist, kann das beschriebene Gehäuse aus dem festen Träger 5 und der mit der Membran 4 bewegbaren und korrosionssicheren Abdeckung 6 aufweisen.

Der beschriebene hochgenaue Drucksensor mit dem Gehäuse aus dem festen Träger 5 und der mit der Membran 4 bewegbaren, korrosionssicheren Abdeckung 6 ist kostengünstig herstellbar, für korrosive Umgebung - beispielsweise für Heizwasserkreise - gut geeignet und zudem einfach einzubauen und anzuschliessen.

## Patentansprüche

1. Drucksensor mit einer in einem Gehäuse angeordneten, in einer Platte (1) aus Halbleitermaterial ausgebildeten und mit einem elektrisch anschliessbaren Wandler (2) versehenen Membran (4), bei dem
das Gehäuse einen festen, die Platte (1) umrahmenden Träger (5) und eine im Bereich der Membran (4) mit dieser auslenkbare, mindestens teilweise aus mehreren Schichten aufgebaute, korrosionssichere Abdeckung (6) aufweist,
Anschlusselemente (7), welche elektrische Verbindungen (8) zum Wandler (2) aufweisen, durch den Träger (5) geführt und vom Träger (5) festgehalten sind,
eine erste Schicht der Abdeckung (6) ein Druckmittlermedium (9) ist, durch welches die Membran (4), der Wandler (2) und die elektrischen Verbindungen (8) abgedeckt sind und durch welches der Wandler (2) und die elektrischen Verbindungen (8) gegenüber weiteren Schichten der Abdeckung (6) elektrisch isoliert sind, und
eine zweite Schicht der Abdeckung (6) eine als im Tauchverfahren auf einem zähfliessenden polymeren Druckmittlermedium (9) aufgebracht Beschichtung oder als ein Übergangsmetall aufweisende Beschichtung ausgebildete Schutzschicht (10) ist, durch die der Drucksensor vollständig eingehüllt und wasserdicht abgeschlossen ist.

2. Drucksensor nach Anspruch 1, dadurch gekennzeichnet,
dass eine dritte Schicht der Abdeckung (6) eine Haftmittlerschicht (11) ist, welche zwischen dem Druckmittlermedium (9) und der Schutzschicht (10) angeordnet ist.

3. Drucksensor nach Anspruch 1 oder 2, dadurch gekennzeichnet,
dass die Schutzschicht (10) aus einem Übergangsmetall ist.

4. Drucksensor nach Anspruch 3, dadurch gekennzeichnet,
dass die Schutzschicht (10) aus einem Metall der Gruppe Niob, Tantal und Titan ist.

5. Drucksensor nach einem der Ansprüche 1 bis 4, dadurch gekennzeichnet,
dass das Druckmittlermedium (9) aus einem zähfliessenden Polymer ist.

6. Drucksensor nach einem der Ansprüche 1 bis 5, dadurch gekennzeichnet,
dass das Druckmittlermedium (9) aus Silikon-Gel ist.

7. Drucksensor nach einem der Ansprüche 2 bis 6, dadurch gekennzeichnet,
dass die Haftmittlerschicht (11) aus einem Polymer ist.

8. Drucksensor nach einem der Ansprüche 2 bis 7, dadurch gekennzeichnet,
dass die Haftmittlerschicht (11) aus Polyimid ist.

9. Drucksensor nach einem der Ansprüche 2 bis 6, dadurch gekennzeichnet,
dass die Haftmittlerschicht (11) aus einem Metall ist.

10. Drucksensor nach Anspruch 9, dadurch gekennzeichnet,
dass die Haftmittlerschicht (11) aus Gold ist.

## Claims

1. A pressure sensor comprising a diaphragm (4) arranged in a housing and formed in a plate (1) of semiconductor material and provided with an electrically connectable transducer (2), wherein
the housing has a fixed carrier (5) which forms a frame around the plate (1), and a corrosion-resistant cover means (6) which is at least partially built up from a plurality of layers and which in the region of the diaphragm (4) can be deflected with same,
connecting elements (7) which have electrical connections (8) to the transducer (2) are passed through the carrier (5) and are held fast by the carrier (5),
a first layer of the cover means (6) is a pressure-transmitting medium (9) by which the diaphragm (4), the transducer (2) and the electrical connections (8) are covered and by which the transducer (2) and the electrical connections (8) are electrically insulated relative to further layers of the cover means (6), and
a second layer of the cover means (6) is a protective layer (10) which is in the form of a coating applied in a dip process to a viscous polymeric pressure-transmitting medium or in the form of a coating having a transition metal and by which the pressure sensor is completely encased and watertightly closed off.

2. A pressure sensor according to claim 1 characterised in that
a third layer of the cover means (6) is a bonding layer (11) which is arranged between the pressure-transmitting medium (9) and the protective layer (10).

3. A pressure sensor according to claim 1 or claim 2 characterised in that
the protective layer (10) is made from a transition metal.

4. A pressure sensor according to claim 3 characterised in that
the protective layer (10) is made from a metal from the group of niobium, tantalum and titanium.

5. A pressure sensor according to claims 1 to 4 characterised in that
the pressure-transmitting medium (9) is of a viscous polymer.

6. A pressure sensor according to one of claims 1 to 5 characterised in that
the pressure-transmitting medium (9) is of a silicone gel.

7. A pressure sensor according to one of claims 2 to 6 characterised in that
the bonding layer (11) is of a polymer.

8. A pressure sensor according to one of claims 2 to 7 characterised in that
the bonding layer (11) is of polyimide.

9. A pressure sensor according to one of claims 2 to 6 characterised in that
the bonding layer (11) is of a metal.

10. A pressure sensor according to claim 9 characterised in that
the bonding layer (11) is of gold.

## Revendications

1. Capteur de pression comportant une membrane (4) disposée dans un boîtier et agencée sous la forme d'une plaque (1) réalisée en un matériau semiconducteur et comportant un transducteur (2) pouvant être raccordé électriquement, dans lequel
le boîtier comporte un support rigide (5), qui entoure la plaque (1), et un revêtement (6) qui peut être dévié dans la zone de la membrane (4), conjointement avec cette dernière, est constitué au moins en partie de plusieurs couches et résiste à la corrosion,
des éléments de raccordement (7), qui possèdent des liaisons électriques (8) avec le transducteur (2), traversent le support (5) et sont maintenus fermement par le support (5),
une première couche du revêtement (6) est un milieu de transmission de pression (9), qui recouvre la membrane (4), le transducteur (2) et les liaisons électriques (8) et qui isole électriquement le transducteur (2) et les liaisons électriques (8) vis-à-vis d'autres couches de revêtement (6), et
une seconde couche du revêtement (6) est une couche de protection (10), réalisée sous la forme d'un revêtement déposé selon un procédé d'immersion sur un milieu visqueux de transmission de pression, ou sous la forme d'un revêtement contenant un métal de transition et au moyen de laquelle le capteur de pression est complètement enveloppé et renfermé d'une manière étanche à l'eau.

2. Capteur de pression selon la revendication 1, caractérisé en ce
qu'une troisième couche du revêtement (6) est une couche adhésive (11), qui est disposée entre le milieu de transmission de pression (9) et la couche de protection (10).

3. Capteur de pression selon la revendication 1 ou 2, caractérisé en ce
que la couche de protection (10) est formée par un métal de transition.

4. Capteur de pression selon la revendication 3, caractérisé en ce
que la couche de protection (10) est réalisée en un métal du groupe niobium, tantale et titane.

5. Capteur de pression selon l'une de revendications 1 à 4, caractérisé en ce
que le milieu de transmission de pression (9) est formé d'un polymère visqueux.

6. Capteur de pression selon l'une de revendications 1 à 5, caractérisé en ce
que le milieu de transmission de pression (9) est formé par un gel de silicone.

7. Capteur de pression selon l'une des revendications 2 à 6, caractérisé en ce
que la couche adhésive (11) est formée d'un polymère.

8. Capteur de pression selon l'une des revendications 2 à 7, caractérisé en ce
que la couche adhésive (11) est formée par du polyimide.

9. Capteur de pression selon l'une des revendications 2 à 6, caractérisé en ce
que la couche adhésive (11) est formée d'un métal.

10. Capteur de pression selon la revendication 9, caractérisé en ce que la couche adhésive (11) est formée d'or.
